# EUROPÄISCHE PATENTSCHRIFT

(11) **EP 0 481 028 B1**
(45) Veröffentlichungstag und Bekanntmachung des Hinweises auf die Patenterteilung: **28.12.1994**
(21) Anmeldenummer: 91907001.1
(22) Anmeldetag: 02.04.1991
(51) Int. Cl.: B65H 20/16

(54) **KLUPPE**
CLIP
PINCE

(30) Priorität: 03.05.1990 DE 4014227
(43) Veröffentlichungstag der Anmeldung: 22.04.1992
(73) Patentinhaber: Brückner Maschinenbau Gernot Brückner GmbH & Co. KG, 83313 Siegsdorf (DE)
(72) Erfinder: WELLENHOFER, Peter, D-8217 Grassau-Mietenkam (DE); LINDNER, Paul, A-5302 Henndorf am Wallersee (AT)
(74) Vertreter: Flach, Dieter Rolf Paul, Dipl.-Phys.
(86) Internationale Anmeldenummer: EP9100627
(87) Internationale Veröffentlichungsnummer: WO9117107

(56) Entgegenhaltungen:
- DE-A- 3 229 098
- DE-A- 3 629 508
- DE-B- 1 924 731
- GB-A- 476 652
- US-A- 1 928 930
- US-A- 3 948 508

## Beschreibung

Die Erfindung betrifft eine Kluppe nach dem Oberbegriff des Anspruches 1.

Kluppen werden in der Technik zum Längsbewegen von Materialbahnen, insbesondere Folienbahnen, benötigt. Beispielsweise in einer Vorrichtung zum Strecken von Kunststoff-Folienbahnen ist zur Transportrichtung symmetrisch links und rechts jeweils eine geschlossene Führungseinrichtung vorgesehen, an der umlaufend miteinander verbundene Kluppenkettenglieder oder Kluppenwagen vorgesehen sind, auf denen die Kluppen am Beginn der Vorrichtung die Material- oder Folienbahn ergreifen und bis zum Ende der Vorrichtung vorbewegen.

Dabei werden in der Vorrichtung die entsprechenden Kluppenhebel durch geeignete Betätigungsglieder einmal in ihre Verschlußstellung, in der sie die Material- oder Folienbahn zwischen ihrem Klemmstück und dem Kluppentisch eingeklemmt halten, und am Ende der Vorrichtung wieder in ihre Öffnungsstellung verschwenkt, in der sie die Material- oder Folienbahn wieder freigeben

Die Kluppen sind dabei nach dem Stand der Technik mit einem Achsbolzen versehen, der in einer entsprechenden am Kluppenkörper ausgebildeten Achslagerung gelagert ist. Eine derartige Kluppe ist z.B. aus DE-A-3 629 508 bekannt.

Der fertigungstechnische Aufwand für derartige Kluppen und Kluppenlager ist aber beachtlich. Denn die Fertigung erfordert die Einhaltung höchster Toleranzen. Dies ist schon daraus ersichtlich, daß beispielsweise mit den Kluppen Kunststoff-Folienbahnen geklemmt werden sollen, die eine Foliendicke von bis zu etwa 2 µ aufweisen. Die geforderte Toleranz sollte deshalb zumindest 1 µ aufweisen.

Darüber hinaus besteht aber seit jeher das Problem, daß die Achslagerung insbesondere bei Vorrichtungen zum Strecken von Kunststoff-Folienbahnen im Laufe der Zeit zunehmend verscrimutzen und zu einer Schwergängigkeit der Kluppenhebel führen oder im Extremfall sogar eine Verschwenkbewegung der Kluppenhebel unterbinden. Das Problem der Verschmutzung und Ablagerung entsteht vor allem beim Recken von Folien mit hohen Additiv-Anteilen, wie sie in der Regel den Kunststoff-Folien beigegeben sind, um beispielsweise eine antistatische Aufladung zu vermeiden, Siegelqualitäten zu erhöhen und beispielsweise auch Barriereschichten in den Kunststoff-Folienbahnen einzubringen.

Die Ablagerung dieser Additive in den Lagerstellen führt dann zu dem erwähnten Effekt der Verschmutzung und Verklebung, wodurch die Funktionstüchtigkeit der Anlage insgesamt gefährdet ist.

Auch die Reinigung und der Ausbau derartiger Kluppenhebel ist nach dem Stand der Technik aufwendig. Zwar kann das eigentliche Klemmstück oft durch Herumschwenken des Kluppenhebels in eine Reinigungsposition noch relativ leicht zugänglich gereinigt werden.

Der Ausbau der Kluppenhebel aber erfordert zunächst einmal den Ausbau eines gesamten Kluppenwagens oder Kluppenkörpers, um danach überhaupt an die erst dadurch freiliegenden Verschwenkachsen zur Montage und Demontage herankommen zu können.

Aufgabe der vorliegenden Erfindung ist es von daher, die Nachteile nach dem Stand der Technik zu überwinden und eine Kluppe zu schaffen, die auch bei auftretender Ablagerung und der Gefahr von Verschmutzung ein Festsetzen der Verschwenkeinrichtung vermeidet. Dabei soll in bevorzugter Weise auch eine gegenüber dem Stand der Technik sehr viel leichtere Montage und Demontage eines Kluppenhebels möglich sein.

Die Aufgabe wird erfindungsgemäß entsprechend den im Anspruch 1 angegebenen Merkmalen gelöst. Vorteilhafte Ausgestaltungen der Erfindung sind in den Unteransprüchen angegeben.

Durch die vorliegende Erfindung wird eine deutliche Verbesserung gegenüber dem Stand der Technik erzielt.

Erfindungsgemäß wird nämlich eine Lagerung des Kluppenhebels nach Art einer Wiege, also eine drehachsenkörperfreie Lagerung vorgesehen. Diese Wiegelagerung kann nach Art einer "Schneidenlagerung" oder nach Art einer "Wälzlagerung" erfolgen. Durch eine messerähnliche Schneidenlagerung wird an der im Querschnitt keilförmig zulaufenden Messerspitze die eigentliche Achslagerung erzielt, an der so hohe Flächenpressungen auftreten, daß dadurch eine Selbstreinigung auftritt. Verschmutzungen werden hier aus dieses Preßbereichen selbsttätig herausgedrückt, Verunreinigungen in diesem Bereich können sogar einen gewissen Schmiereffekt haben und zur Herabsetzung der Reibung beitragen. Da vor allem keine engen Querschnitte, die sich verlegen oder verharzen können, vorgesehen sind, erhöht sich vor allem auch die Betriebssicherheit.

Schließlich ist auch keine weitere Schmierung erforderlich. Als weiterer Vorteil ergibt sich, daß der Kluppenhebel auch für hohe Öffnungs- und Schließgeschwindigkeiten geeignet ist und dabei nur geringe Öffnungskräfte erfordert. Ein sog. Slip-Stick-Effekt wie beim Stand der Technik wird erfindungsgemäß ebenfalls vermieden.

Schließlich lassen sich bei entsprechender Werkstoffauswahl die Schneiden- und Abwälzradien entsprechend der Belastung wählen.

Der erfindungsgemäße Kluppenhebel kann zudem gegenüber dem Stand der Technik auch sehr viel problemloser ein- und ausgebaut werden. Eine Demontage eines gesamten Kluppenwagens oder Kluppenkörpers als Voraussetzung für die Demontage eines Kluppenhebels ist nicht mehr erforderlich.

Ferner kann auch eine Anschlag-Sicherung vorgesehen sein, damit bei Verschwenken des geöffneten Kluppenhebels in seine Verschließstellung in jedem Fall gewährleistet ist, daß bei zu hohen Schließkräften der Kluppenhebel von seiner Wiegelagerung über ein vorbestimmtes Maß hinaus nicht abgehoben und verstellt wird.

Trotz der erfindungsgemäßen lediglich durch eine Kraft- und/oder Formschlußsicherung auf dem Wiegelager gehaltenen Kluppenhebel kann in einer zweckmäßigen Weiterbildung der Erfindung die kluppenkörperseitige Abstützung einer Doppelfunktionsfeder so angeordnet sein, daß selbst bei einem unbeabsichtigten Federbruch der Kluppenhebel unverlierbar am Kluppenkörper gehalten bleibt.

In einer bevorzugten Ausführungsform der Erfindung ist die Lagerung zumindest geringfügig ballig in Längsrichtung der Kipp- oder Wälzachse ausgeführt. Dies ermöglicht eine Selbsteinstellung parallel zur Folie und zum Kluppentisch. Bei den häufig geringen Kunststoffolien-Dicken von etwa bis zu 2 µ, die nach dem Stand der Technik eine höchste Fertigungsgenauigkeit für die Kluppenlagerung erforderten, um beispielsweise Toleranzen von weniger als 1 µ einhalten zu können, ergibt sich dadurch eine drastische Verbesserung. Denn durch die zweckmäßige Ballenlagerung und die damit verbundene Selbsteinstellung wird stets die zu klemmende Folie vollflächig am Klemmabschnitt des Kluppenhebels ergriffen und sandwichartig eingeklemmt, ohne daß die nach dem Stand der Technik hohen Fertigungstoleranzen eingehalten werden müssen.

Weitere Vorteile, Einzelheiten und Merkmale der Erfindung ergeben sich nachfolgend aus den anhand von Zeichnungen dargestellten Ausführungsbeispielen. Dabei zeigen im einzelnen:
- Figur 1 :: eine schematische Vertikalquerschnittdarstellung durch eine auf einem Kluppenwagen sitzende erfindungsgemäße Kluppe in Verschlußstellung;
- Figur 2 :: eine Darstellung des Kluppenhebels in Öffnungsstellung;
- Figur 3a bis 3f :: eine weitere Darstellung des in den Figuren 1 und 2 gezeigten Kluppenhebels bei der Montage bzw. Demontage;
- Figur 3g :: ein alternatives Beispiel für die Montage und Demontage des Kluppenhebels;
- Figur 4 :: eine vergrößerte Detaildarstellung der Schneidenlagerung;
- Figur 5a :: eine auszugsweise alternative Ausstellung mit kinematisch vertauschter Schneidenlagerung;
- Figur 5b :: eine Seitendarstellung einer gekrümmten Schneide;
- Figur 6 und 7 :: ein weiteres Ausführungsbeispiel im schematischen Vertikalquerschnitt bei einem in geschlossener und geöffneter Stellung gezeigten Kluppenhebel;
- Figur 8 und 9 :: ein weiteres Ausführungsbeispiel im Querschnitt mit einem in geschlossener wie geöffneter Stellung gezeigten Kluppenhebel;
- Figur 10 :: ein Beispiel in schematischer Längs-Draufsicht auf eine in den Figuren 8 und 9 gezeigte Federeinrichtung;
- Figur 11 :: eine schematische Stirnseitenansicht auf ein weiteres Ausführungsbeispiel;
- Figur 12 :: eine schematische Längsseitenansicht auf das in Figur 11 gezeigte Ausführungsbeispiel;
- Figur 13 :: eine Abwandlung zu Figur 11 in schematischer Stirnseitenansicht;
- Figur 14 :: eine vergrößerte Detaildarstellung für ein weiteres Ausführungsbeispiel.

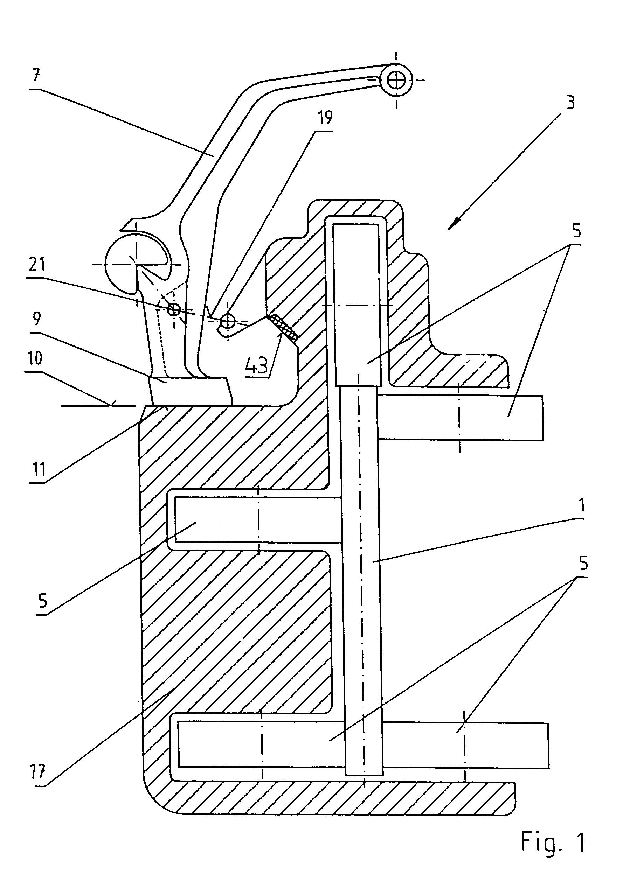

In Figur 1 ist in schematischer Vertikalquerschnittdarstellung quer zu einem Führungsschienensystem 1 ein ein Teil einer umlaufenden Transportkette bildender Kluppenwagen 3 gezeigt, der über mehrere Laufrollen 5 längs des Führungsschienensystems 1 in an sich bekannter Weise verfahren wird.

Auf der Oberseite des Kluppenwagens ist ein Kluppenhebel 7 vorgesehen, der zwischen seiner Verschluß- und seiner Öffnungsstellung verschwenkbar ist.

In seiner Verschlußstellung liegt sein unteres Klemmstück 9 auf einem Kluppentisch 11 auf. In dieser Funktionsstellung wird zwischen dem Klemmstück 9 und dem Kluppentisch 11 eine sich in der dargestellten Zeichnung nach links erstreckende Folie oder Materialbahn 10 am Folien- oder Materialrand ergriffen und sandwichartig zwischen Klemmstück und Kluppentisch eingeklemmt.

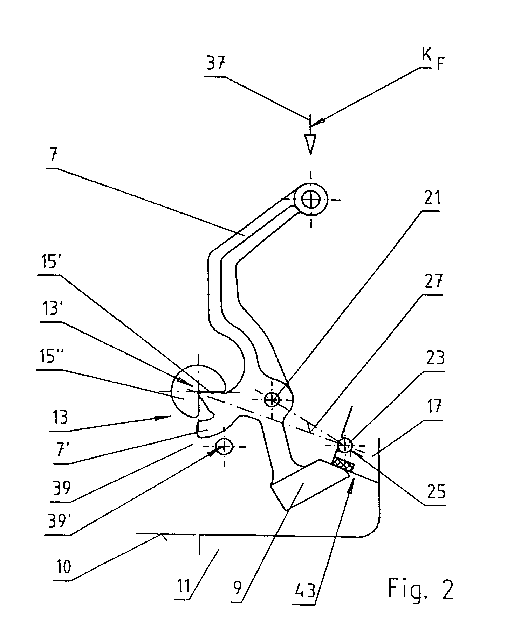

Der in den Figuren 1 bis 3 dargestellte Kluppenhebel ist beispielsweise in einem Winkelbereich von weniger als 40°, im gezeigten Ausführungsbeispiel von um etwa 30° bis in seine in Figur 2 dargestellte Öffnungsstellung verschwenkbar.

Als Schwenklagerung dient eine Wiegenlagerung 13, die im Ausführungsbeispiel gemäß den Figuren 1 bis 4 auch als Schneiden- oder Messerlagerung 13' bezeichnet werden kann.

Das Schneiden- oder Messerlager 13' umfaßt zwei zusammenwirkende Lagerteile 15' und 15'', die im gezeigten Ausführungsbeispiel nach den Figuren 1 bis 3 aus einem einen Teil des Kluppenhebels 7 bildenden schneiden- bis messerförmigen Lagerteil 15' und einem mit einer sektorförmigen, d.h. V-förmigen Lagerausnehmung versehenen zweiten Wider-Lagerteil 15'' besteht, welches ortsfest am den Kluppenwagen 3 bildenden Kluppenkörper 17 abgestützt ist. Die eine Verschwenkbegrenzung darstellende sektorförmige Lagerausnehmung umfaßt im gezeigten Ausführungsbeispiel einen Winkel von etwa 80 bis 100°, also um etwa 90°. Ein spitzer bis stumpfer Winkel in entsprechender Abstimmung des Winkelquerschnittes des schneiden- bis messerförmigen Lagerteiles 15' ist möglich.

Der eigentliche Schneiden- oder Messerradius bei entsprechend angepaßtem Radius der Negativkante an der V-förmig spitz zulaufenden Lagerausnehmung kann entsprechend den erforderlichen Anpreßkräften vorgewählt werden. Das Lagerteil 15' kann auch als auswechselbarer Einsatz ausgeführt sein.

Ferner ist noch eine sog. Doppelfunktionsfeder 19 als Druckfeder vorgesehen, die beispielsweise über einen Bolzen 21 am Kluppenhebel 7 und über einen Bolzen 23 am Kluppenkörper 17 abgestützt sein kann. Zumindest hier kann der Bolzen 23 in einer halbzylinderförmig offenen augenförmigen Vertiefung 25 eingreifen und liegen. Derartige Doppelfunktionsfedern 19 sind hinlänglich bekannt und sind in der Regel in einer Schutzhülse oder zwei teleskopartig ineinander bewegbaren Hülsenteilen untergebracht.

Es ist auch denkbar, pro Messerklappe zwei Doppelfunktionsfedern einzusetzen.

Die Doppelfunktionsfeder 19 hat eine Totpunktcharakteristik, so daß beim Verschwenken des Kluppenhebels 7 von seiner Verschlußin seine Öffnungsstellung oder umgekehrt stets die eine Totpunktlinie darstellende Wirklinie 27 überschritten wird, so daß über die Doppelfunktionsfeder 19 der Kluppenhebel in seiner jeweiligen Endlage, d.h. in seiner Verschluß- wie auch in seiner Öffnungslage in dieser Lage vorgespannt und selbsttätig nicht rückverschwenkbar gehalten wird.

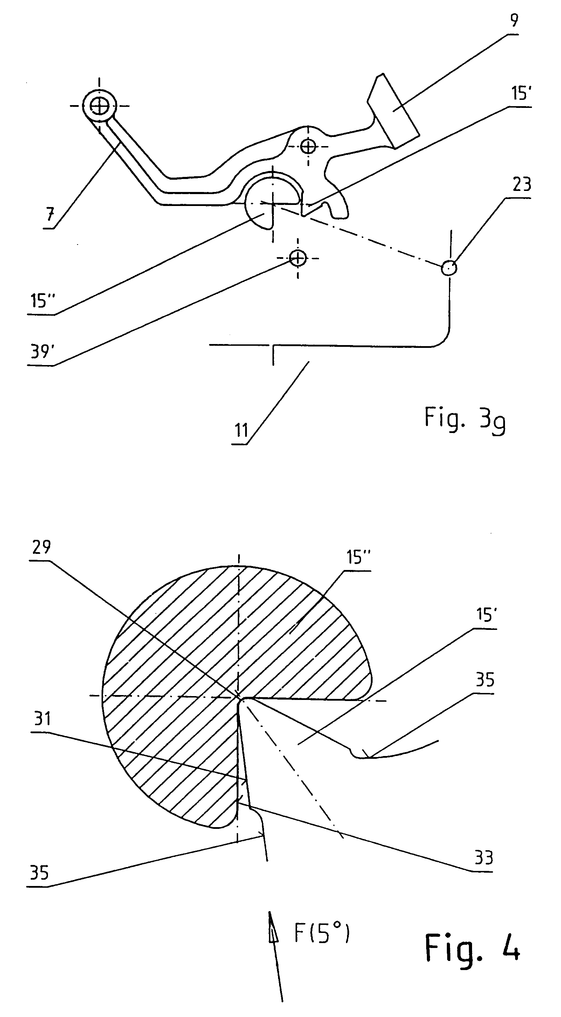

In Figur 4 ist eine vergrößerte Detaildarstellung der Schneidenlagerung gezeigt. Daraus ist ersichtlich, daß auch in der unteren Verschlußstellung zwischen der parallel zur in Längsrichtung, d.h. in Förderrichtung des Kluppenwagens, verlaufenden Verschwenk- oder Kippachse 29 ausgerichteten Begrenzungswand 31 des schneidenförmigen Lagerteiles 15' und der benachbarten Begrenzungswand 33 der eine Verschwenkbegrenzung darstellenden V-förmigen Lagerausnehmung ein geringes Toleranzmaß verbleibt, worüber die sich gegebenenfalls in der Schneidenlagerung festsetzenden Ablagerung durch den hohen Preßdruck vor allem im unmittelbaren hohe Preßkräfte aufnehmenden Kippachsenbereich 29 radial nach außen herausgedrängt werden können. Schließlich kann in radialer Ausrichtung ferner noch an dem schneidenförmigen Lagerteil 15' und gegebenenfalls auch an dem feststehenden mit der sektorförmigen Lagerausnehmung versehenen zweiten Lagerteil 15'' eine Hinterschneidung 35 ausgebildet sein.

Beim Verschwenken des Kipphebels von seiner in Figur 2 (wobei in Figur 2 die Lage eines Anschlages 43 und des Bolzens 23 zu Figur 1 abweichend rein schematisch gezeigt ist) dargestellten Öffnungsstellung in seine in Figur 1 dargestellte Verschlußstellung werden gemäß der Pfeildarstellung 37 Schließkräfte K_{F} auf den Kluppenhebel eingeleitet. Um dabei ein unbeabsichtigtes Abheben des schneidenförmigen Lagerteiles 15' aus der V-förmigen Lagerausnehmung zu vermeiden, ist noch eine Verstellbegrenzung 39 in Form eines Anschlages 39' vorgesehen, der kluppenkörperseitig abgestützt ist. Normalerweise ist die Doppelfunktionsfeder 19 so ausgeführt, daß stets der Kluppenhebel 7 mit seinem Lagerteil 15' an dem kluppenkörperseitigen weiteren Lagerteil 15'' am V-förmig zulaufenden und die Verschwenkachse 29 bildenden Boden gehalten ist . Sollte die Kraft der Doppelfeder aus irgendeinem Grund nicht ausreichen, so würde ein am Kluppenhebel 7 ausgebildeter, im Querschnitt bogenförmiger Ansatz 7' an dem in Form eines in Längsrichtung des Kluppenwagens 3 verlaufenden bolzenförmigen Anschlages 39' unter Überwindung eines geringfügigen Spiels anschlagen. Ein weiteres Abheben und Auseinandertriften der beiden Lagerteile 15' und 15'' ist dann nicht möglich. Ein Abheben wäre aber auch ansonsten nur kurzzeitig, da durch die Doppelfunktionsfeder anschließend wieder die beiden Lagerteile so zusammengeführt werden, daß die Schneide am V-förmigen Boden des zweiten Lagerteiles 15'' zu liegen kommt.

Zur Verschwenkbegrenzung in Öffnungsstellung ist für den Kluppenhebel 7 ein Anschlag 43 oder ein gedämpfter Anschlag vorgesehen. Alternativ wäre auch möglich, daß als Anschlaß 43 nicht ein entsprechend in Figur 2 nur schematisch angedeuteter Abschnitt des Kluppenkörpers 17 vorgesehen ist, sondern daß dazu die Doppelfunktionsfeder 19 im allgemeinen und deren im Kluppenkörper abgestützter Bolzen 23 im besonderen dient.

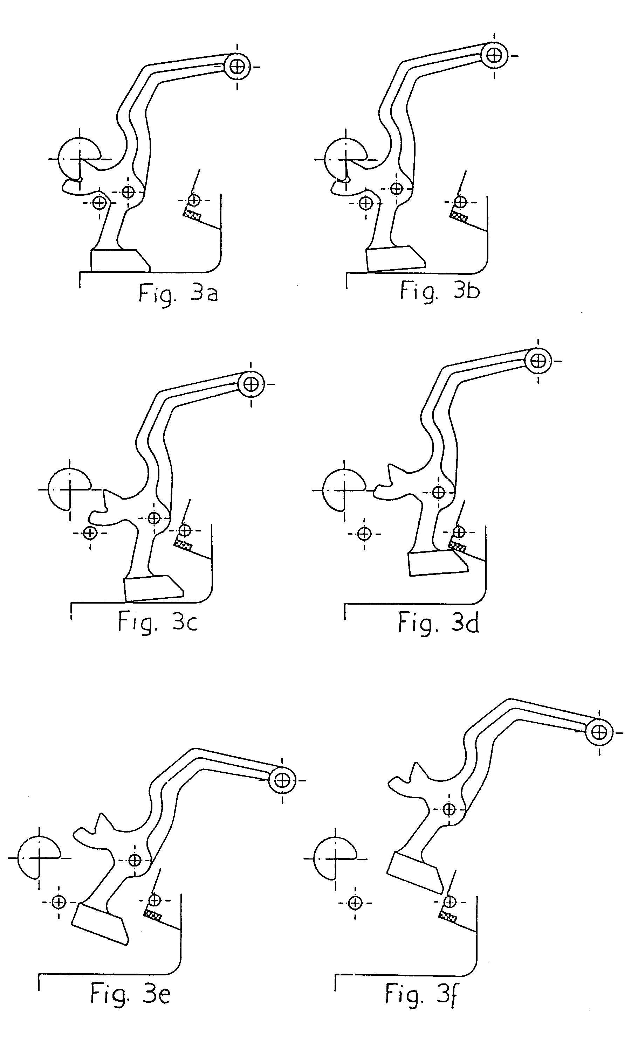

Zum Ein- und Ausbau des Kluppenhebels muß lediglich die Doppelfunktionsfeder durch Herausnehmen des Bolzens 23 und Verschwenken der Feder 19 ausgehängt werden. Da dadurch in der einen Ausführungsform auch die Anschlagbegrenzung in Form der Doppelfunktionsfeder bzw. des zugehörigen Bolzens 23 wegfällt, kann dann, wie in Figur 3 dargestellt ist, der Kluppenhebel 7 entgegen dem Uhrzeigersinn problemlos ausgeschwenkt und ausgebaut werden. Im Falle des kluppenkörperseitigen Anschlages 43 gemäß Figur 1 und 2, an dem beispielsweise die rückwärtige Seite des Klemmstückes 9 anschlägt, ist ein Ausbau des Kluppenhebels dadurch möglich, daß er von seiner in Figur 1 dargestellten Verschlußstellung geringfügig, beispielsweise um bis zu 5° in Öffnungsrichtung zunächst verschwenkt und dann in den Figuren 1 bis 3 leicht nach rechts soweit verschoben wird, bis der messerförmige Lagerteil 15' seitlich versetzt neben dem, mit der V-förmigen Vertiefung versehenen zweiten Lagerteil 15'' zu liegen kommt, um dann den Kluppenhebel nach oben hin herausnehmen zu können, wobei er leicht verschwenkt wird. Die Montage erfolgt umgekehrt. Die Demontage ist dabei in den aufeinanderfolgenden Schritten gemäß den Figuren 3a bis 3f dargestellt.

In Figur 3g ist eine Alternative für den Ein- und Ausbau des Kluppenhebels 7 dargestellt. Bei dieser Ausführungsform ist der Bolzen 23 am Kluppenkörper 17 so abgestützt, daß nach Entfernung bzw. dem Aushängen der Doppelfunktionsfeder 19 der Kluppenhebel 7 unmittelbar in der Darstellung gemäß Figur 3g im Gegenuhrzeigersinn um das Lagerteil 15'' herum verschwenkt werden kann. In diesem Ausführungsbeispiel bildet die Doppelfunktionsfeder 19, die in der Regel durch einen inneren Richtungsstab oder durch eine äußere Metallhülse oder zwei ineinander teleskopartig verfahrbare Hülsenteile geschützt ist, den eigentlichen Anschlag 43.

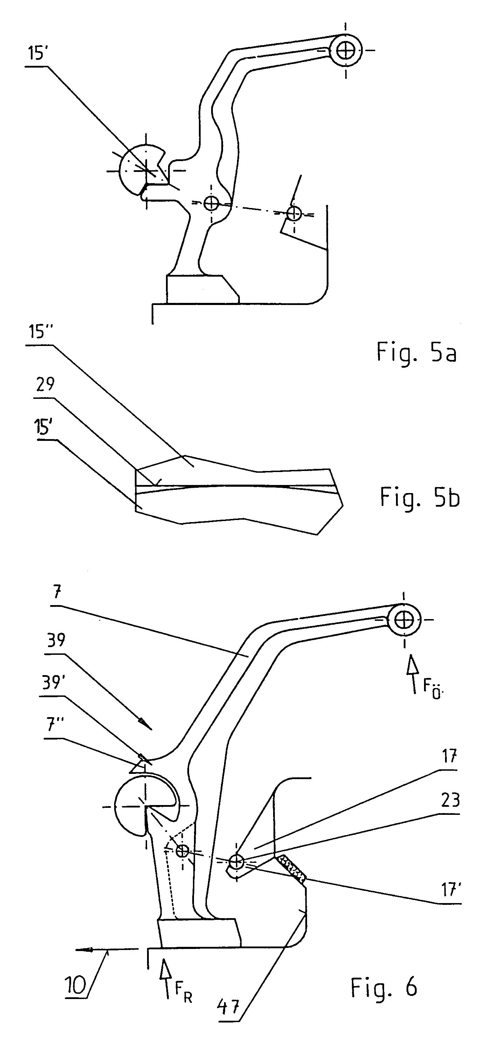

Anhand von Figur 5a ist nur verdeutlicht, daß eine Lagerung gleichermaßen auch dann möglich ist, wenn die beiden Lagerteile 15' und 15'' im Sinne einer kinematischen Vertauschung ausgewechselt werden, also das schneiden- bis messerförmige Lagerteil 15'' ortsfest am Kluppenkörper 17 abgestützt und der damit zusammenwirkende zweite Lagerteil 15' an dem Kluppenhebel 7 ausgebildet ist, der die V-förmige Lagerausnehmung aufweist.

Um eine möglichst einfache Selbstausrichtung des Kluppenhebels 7 auch bei Toleranzfehlern zu gewährleisten, kann die schneidenförmige, am Boden der V-förmigen Vertiefung aufliegende Messerkante in Längsseitenansicht, wie in Figur 5b übertrieben dargestellt, zumindest leicht ballig ausgebildet sein, so daß dieses messerförmige Lagerteil 15' auf der in Längsrichtung des Kluppenwagens 3 verlaufenden Verschwenk- und Kippachse 29 leicht hin und her schwenken kann.

Dadurch wird eine automatische Selbsteinstellung parallel zur Folie und zum Kluppentisch stets gewährleistet.

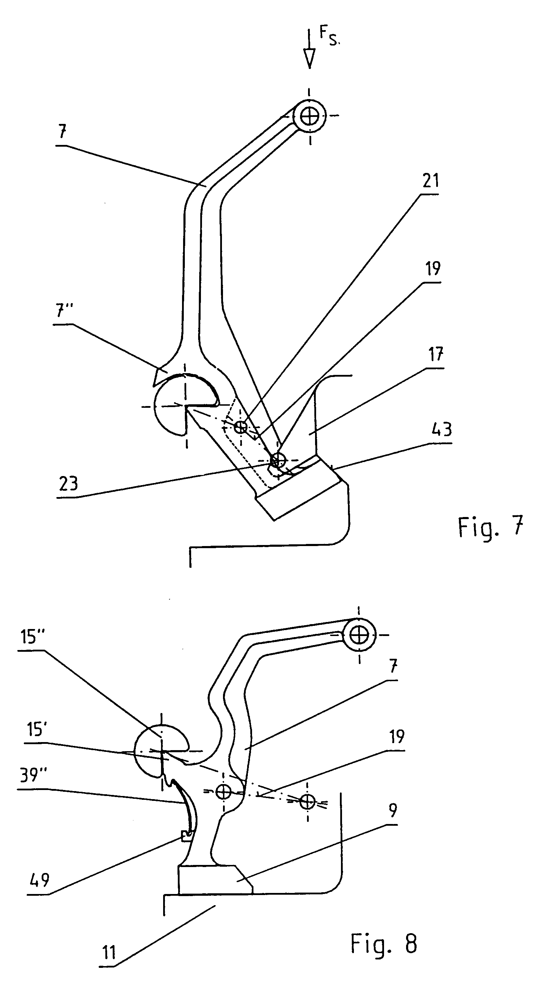

In Figur 6 und 7 ist eine Abwandlung zu den vorausgegangenen Figuren insoweit gezeigt, als hier die Verstellbegrenzung 39 einen nunmehr oberhalb des kluppenkörperseitigen Lagerteils 15'' überstehenden Ansatz 7'' umfaßt, der ebenfalls wieder in geringem Spiel zu dem ansonsten im Querschnitt bogenförmig ausgebildeten Lagerteil 15'' oberhalb diesem zu liegen kommt. Bei Verstellung des Kluppenhebels von seiner Öffnungs- in seine Verschlußstellung würde bei einem Wegdrücken des Kluppenhebels aus seiner Lagerverankerung heraus nach unten hin in Richtung Kluppentisch 11 dieser bogenförmige Ansatz 7'' an der nach oben liegenden, zylinderförmigen Begrenzungswand des kluppenkörperseitig abgestützten Lagerteiles 15'' nach Überwindung des vorgesehenen Spiels anschlagen und dadurch eine Ausweichbewegung des Kluppenhebels begrenzen. Durch die vorgesehene Doppelfedereinrichtung wird ansonsten nach dieser nur kurzzeitig auftretenden Ausweichbewegung der Kluppenhebel wieder in seine ideale Lagerstellung zurückgeführt werden.

Schließlich ist in dieser Ausführungsform der Bolzen 23 an einem in Richtung zur Folien- bzw. Materialbahn weiter vorstehenden Abschnitt 17' des Kluppenkörpers 17 abgestützt. Bei einem möglicherweise auftretenden Doppelfunktionsfeder-Bruch würde dadurch der Kluppenhebel unverlierbar gehalten werden. Durch die vorgesehene Hinterschneidung 47 ist eine Montage und Demontage genauso möglich, wenn zunächst der Kluppenhebel um einige wenige Grad in Öffnungsstellung verschwenkt und dann in der Darstellung gemäß Figur 6 nach rechts verschoben wird, bis die Schneide wieder freiliegt und der Kluppenhebel nach oben hin unter Durchführung einer weiteren Verschwenkbewegung im Uhrzeigersinn problemlos ausgebaut werden kann, wobei das Klemmstück um den vorstehenden Abschnitt 17' des Kluppenkörpers 17 herumgeführt wird.

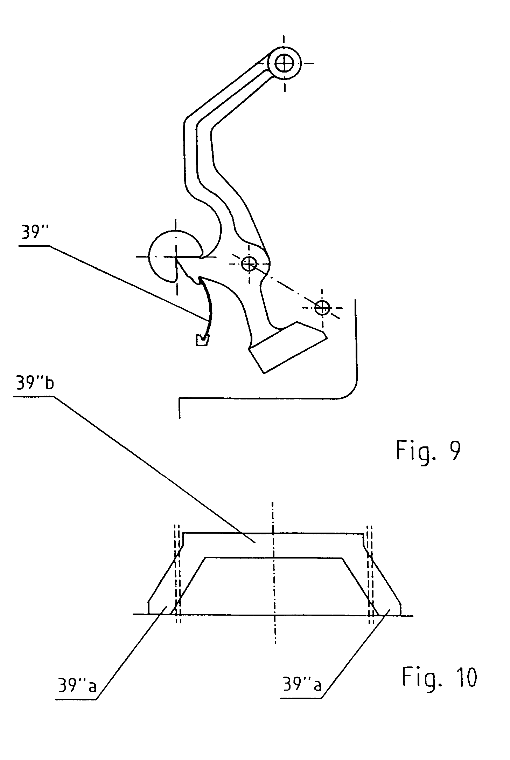

Bei der Ausführungsform gemaß den Figuren 8 und 9 dient als Verstellbegrenzung 39 nicht ein körperfester Anschlag, sondern eine Anschlagfeder 39'', die bevorzugt auch als Blattfeder ausgebildet sein kann. Die Blattfeder ist auf Seiten der Materialbahn an einem entsprechenden obenliegenden Ansatz des Kluppenhebels (aber noch unterhalb des messerförmigen Lagerteiles 15') und an einem tieferliegenden, beispielsweise in Längsrichtung des Kluppenwagens verlaufenden und darüber gehaltenen Widerlager 49 abgestützt. Sollten die Kräfte dieser Anschlagfeder 39'' bei Verschwenkung des Kluppenhebels in Verschlußstellung nicht ausreichen, um die Kluppenhebel mit seinem Messer oder seiner Schneide 13' stets am Boden der V-förmigen Lagerausnehmung des zweiten Lagerteils 15'' zu halten, so würde zumindest nach einer kurzzeitigen Ausweichbewegung über diese Anschlagfeder 39'' eine Rückführung des Kluppenhebels in seine Lagerstellung erfolgen.

In Figur 8 und 9 ist strichliert vom Prinzip her auch die bereits erläuterte Doppelfunktionsfeder 19 miteingezeichnet. Auf diese Doppelfunktionsfeder 19 könnte aber gleichermaßen verzichtet werden, da die Anschlagfeder 39'' in diesem Falle auch wieder mit einer Totpunktcharakteristik ausgestattet ist und die Aufgabe der Doppelfunktionsfeder 19 miterfüllt.

Die Anschlag- und/oder Doppelfunktionsfeder 39'' in den Figuren 8 und 9 kann im mittleren Bereich oder über die gesamte Länge des Kluppenhebels parallel zur Verschwenk- und Kippachse 29 verlaufend ausgebildet sein. Möglich ist auch, daß an den stirnseitigen Enden der Verschwenk- und Kippachse 29 je eine Blattfeder vorgesehen und abgestützt ist. Anhand von Figur 10 wird nur schematisch erläutert, daß beispielsweise die Anschlagfeder 39'' beidseitig des Kluppenhebels mit ihren Abschnitten 39''a beispielsweise an zwei am vorderen und hinteren Ende des Kluppenwagens ausgebildeten Widerlagern 49 und im mittleren Bereich dazwischen am Kluppenhebel mit ihrem versetzt liegenden Abschnitt 39''b abgestützt sein kann.

Im übrigen könnte auch - sofern sie vorgesehen ist - die Doppelfunktionsfeder ebenfalls als Blattfeder ausgebildet sein. Auch eine mehrfach gelagerte Blattfeder auch mit gegensinnig ausbauchenden Blattfederabschnitten ist möglich.

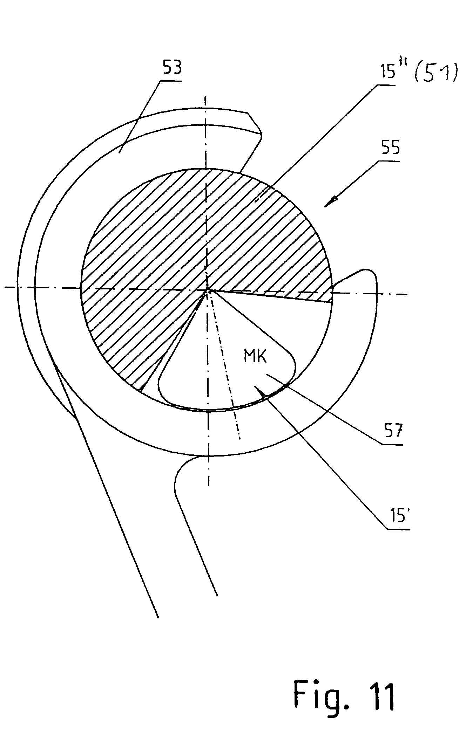

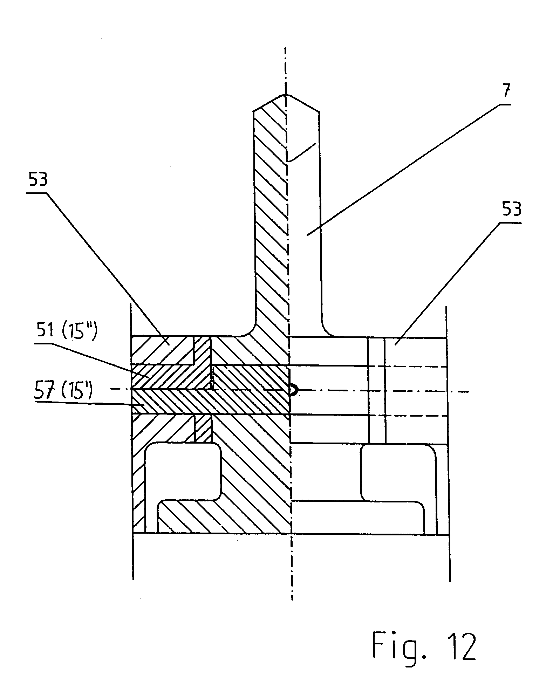

Bei dem Ausführungsbeispiel gemäß den Figuren 11 und 12 wird ein anderes Lösungsprinzip verwirklicht.

Bei dem in den Figuren 11 und 12 dargestellten Ausführungsbeispiel ist abweichend zu den vorausgegangenen Ausführungsbeispielen das mit einer im wesentlichen V-förmigen Aufnahmevertiefung versehene, parallel zur Längsrichtung des Kluppenwagens 3 verlaufende durchgängige Lagerteil 15'' geteilt ausgebildet. Die Lagerung des Kluppenhebels 7 erfolgt nur an einem am vor- und nachlaufenden Ende vorgesehenen zweigeteilten oder zweigegliederten, nach Art eines Einsatzes 51 ausgebildeten Lagerteiles 15''. Dieses Lagerteil ist in einer am Kluppenkörper fest verankerten Aufnahmehülse 53 mit einem Längsschlitz 55 gelagert. Die Öffnungsbreite des Längsschlitzes 55 ist so bemessen, daß nach entsprechendem Verdrehen des Kluppenhebels 7 unter Mitnahme des Einsatzes 51 die beiden am Kluppenhebel 7 in Längsrichtung des Kluppenwagens 3 stirnseitig überstehenden Lageransätze 57, die durch die Lagerteile 15' gebildet sind, durch den Längsschlitz 55 herausgenommen oder eingesetzt werden können.

Im normalen Betrieb sind die die Gegenlager 15'' bildenden Einsätze 51 natürlich verdrehfest verankert oder der mit der Messerklappe fest (d.h. verdrehsicher) verbundene Ansatz 57 bildet die Verdrehsicherung, weil die Kluppe wiederum durch die beiden Stellungen der Doppelfunktionsfeder begrenzt wird.

Zum Ausbau der Messerkluppe muß lediglich die Doppelfunktionsfeder ausgehängt und die Messerkluppe so weit verschwenkt werden, bis der Ansatz 57 mit der Öffnung 55 zur Deckung kommt. Dann kann die Messerkluppe herausgenommen werden. Hierzu können auch die Teile 51 durch horizontales Verschieben demontiert werden.

Die Einsätze 51 werden zwangsweise durch den Lageransatz 57 mitgenommen.

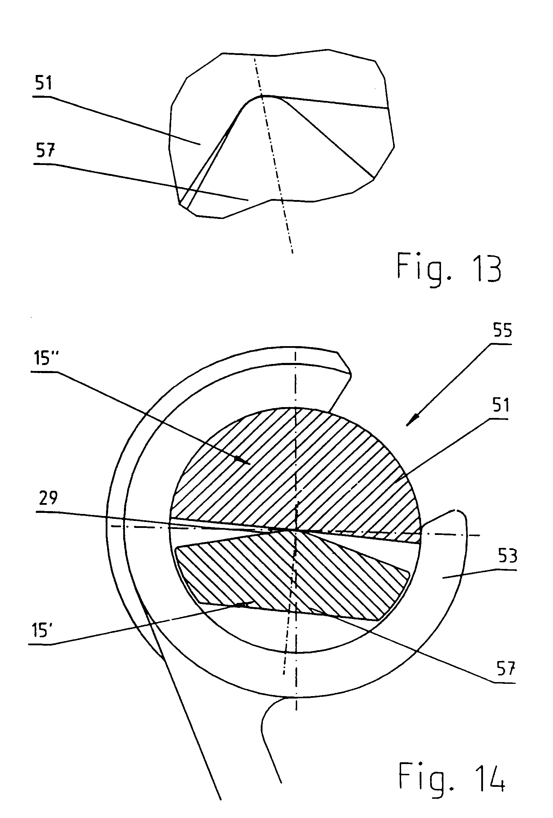

Anhand von Figur 13 ist nur ein vergrößerter Detailausschnitt gezeigt, um darzustellen, daß bei diesem Ausführungsbeispiel das Lagerteil 15' nicht scharfkantig schneiden- bis messerförmig und auch das Gegen-Lagerteil 15'' nicht derart darauf abgestimmt scharfwinkelig, sondern vergleichsweise mit größerem Krümmungsabschnitt versehen ist. Dadurch läßt sich eher eine Abroll- und Wälzbewegung erzeugen, um die Wiegelagerung zu gewährleisten.

Anhand von Figur 14 wird eine Abwandlung zu Figur 11 und 12 insoweit dargestellt, als hier der Einsatz 51 mit einer mehr oder weniger parallel zur axialen Schwenkrichtung ausgerichteten ebenen Widerlager-Fläche ausgestattet ist, an der mit entsprechend versehenem Krümmungsradius ausgebildete, das Lagerteil 15' bildende Einsatz 51 abrollt bzw. sich bei Verschwenken abwälzt. Durch die geschlitzte Aufnahmehülse 53 wird der mit dem Kluppenhebel 7 verbundene schwenkbare, in axialer Richtung überstehende Lageransatz 57 gehalten.

## Patentansprüche

1. Kluppe zur lösbaren Halterung von bewegten Materialbahnen, insbesondere Kunststoff-Folienbahnen, mit einem auf dem Kluppenkörper (17) zwischen seiner Schließstellung und seiner Öffnungsstellung verschwenkbaren und in die jeweilige anschlagsbegrenzte Endlage mittels einer Federeinrichtung (19) vorgespannten Kluppenhebel (7), **dadurch gekennzeichnet**, daß die Verschwenklagerung durch eine achskörperfreie Lagerung nach Art einer Wiegelagerung ausgebildet ist, bei der ein kluppenhebelseitiges Lagerteil (15') an einem zumindest mittelbar kluppenkörperseitig abgestützten weiteren Lagerteil (15'') unter gegenseitiger Anlage unter Bildung der Kipp- oder Wälzachse (29) gehalten ist.

2. Kluppe nach Anspruch 1, **dadurch gekennzeichnet**, daß der Kluppenhebel und damit sein zugehöriges Lagerteil (15') kraftschlüssig unter Anlage an dem damit zusammenwirkenden weiteren kluppenkörperseitigen Lagerteil (15'') gehalten wird.

3. Kluppe nach Anspruch 1, **dadurch gekennzeichnet**, daß der Kluppenhebel und damit sein zugehöriges Lagerteil (15') formschlüssig unter Anlage an dem damit zusammenwirkenden weiteren kluppenkörperseitigen Lagerteil (15'') gehalten wird.

4. Kluppe nach einem der Ansprüche 1 bis 3, **dadurch gekennzeichnet**, daß das kluppenhebelseitige Lagerteil (15') messer- bis schneidenförmig gestaltet ist, und daß das damit zusammenwirkende kluppenkörperseitig abgestützte Lagerteil (15'') mit einer im wesentlichen zumindest ansatzweise im Querschnitt V-förmigen Lagerausnehmung versehen ist.

5. Kluppe nach einem der Ansprüche 1 bis 3, **dadurch gekennzeichnet**, daß das kluppenhebelseitige Lagerteil (15') mit einer im wesentlichen zumindest ansatzweise im Querschnitt V-förmigen Lagerausnehmung versehen ist, und daß das damit zusammenwirkende kluppenkörperseitig abgestützte Lagerteil (15'') messer- bis schneidenförmig gestaltet ist.

6. Kluppe nach Anspruch 4 oder 5, **dadurch gekennzeichnet**, daß die im Querschnitt keilförmig zulaufende Schneide des einen Lagerteils (15') und die entsprechende V-förmige Negativkante in dem zweiten Lagerteil (15'') jeweils mit aufeinander abgestimmten, eine Oberflächengleitung bewirkenden Kontaktradien versehen sind.

7. Kluppe nach Anspruch 4 oder 5, **dadurch gekennzeichnet**, daß das eine Lagerteil (15') mit einem die Kipp- oder Wälzachse (29) bildenden Wälzradius versehen ist, welcher auf dem zweiten Lagerteil (15'') bei Durchführung einer Kippbewegung abrollt.

8. Kluppe nach einem der Ansprüche 1 bis 7, **dadurch gekennzeichnet**, daß in den beiden Endstellungen des Kluppenhebels (7) die messerseitige Begrenzungswand (31) und die an dem damit zusammenwirkenden weiteren Lagerteil (15'') jeweils benachbart liegende Begrenzungswand (33) der im wesentlichen V-förmigen Lagerausnehmung ein zumindest geringfügiges Winkelmaß zum Austritt von Verschmutzungen aufweist.

9. Kluppe nach Anspruch 8, **dadurch gekennzeichnet**, daß das verbleibende Winkelmaß zumindest 0,5°, vorzugsweise zumindest 1° beträgt.

10. Kluppe nach einem der Ansprüche 1 bis 9, **dadurch gekennzeichnet**, daß die V-förmige Lagerausnehmung an dem weiteren Lagerteil (15'') als sektorförmige Ausnehmung in einem im Querschnitt im wesentlichen kreisförmigen bis N-polygonalen parallel zur Kipp- oder Wälzachse (29) verlaufenden Stab gebildet ist.

11. Kluppe nach einem der Ansprüche 1 bis 10, **dadurch gekennzeichnet**, daß ferner eine Verstellbregrenzung (39) zur Vermeidung einer Ausweichbewegung unter Trennung der aufeinander abgestützten Lagerteile (15', 15'') bei Einleitung von Schließkräften in den noch geöffneten Kluppenhebel (7) vorgesehen ist.

12. Kluppe nach Anspruch 11, **dadurch gekennzeichnet**, daß die Verstellbegrenzung (39) aus einer Anschlagbegrenzung (39') besteht, bei der ein entsprechender Ansatz (7', 7'') am Kluppenhebel (7) bei Einleitung von Verschlußkräften auf den noch geöffneten Kluppenhebel (71) nach Überwindung eines Spiels an einem Anschlag (43) anschlägt.

13. Kluppe nach Anspruch 11 oder 12, **dadurch gekennzeichnet**, daß der Anschlag (43) aus dem kluppenkörperseitig abgestützten Wider-Lagerteil (15'') oder einem davon getrennten kluppenkörperseitig abgestützten Anschlag (43) besteht.

14. Kluppe nach Anspruch 11, **dadurch gekennzeichnet**, daß die Verstellbegrenzung (39) als Anschlagfeder-Begrenzung (39'') ausgebildet ist, die zum einen auf dem Kluppenhebel (7) und zum anderen mit dem Kluppenkörper (17) abgestützt und so ausgerichtet ist, daß sie mit entsprechender Kraftkomponente entgegen den Kluppenhebel (7) einwirkenden Schließkräften wirkt.

15. Kluppe nach Anspruch 14, **dadurch gekennzeichnet**, daß lediglich eine Anschlagfeder (39'') vorgesehen ist, die als Federeinrichtung (19) den Kluppenhebel (7) auch in die jewelige Endlage vorgespannt hält.

16. Kluppe nach einem der Ansprüche 1 bis 15, **dadurch gekennzeichnet**, daß insbesondere die Anschlagfeder (39'') und/oder die den Kluppenhebel (7) in die jeweilige Endstellung vorgespannt haltende Federeinrichtung (19) durch eine gegebenenfalls mehrfach geschichtete Blattfeder gebildet ist.

17. Kluppe nach einem der Ansprüche 14 bis 16, **dadurch gekennzeichnet**, daß die vorzugsweise nach Art einer Blattfeder gebildete Anschlagfeder (39'') im wesentlichen in der Mitte der Kipp- oder Wälzachse (29) vorzugsweise im Bereich des Kluppenhebels (7), in zweigeteilter Form am vor- wie nachlaufenden Ende der Kipp- oder Wälzachse (29) oder mit einem parallel zu dieser Kipp- oder Wälzachse (29) verlaufenden zu den stirnseitigen Enden versetztliegenden mittleren Abschnitt (39''b) versehen ist, welcher sich vorzugsweise am Kluppenhebel (7) abstützt, wobei die stirnseitigen Endabschnitte (39''a) der blattfederförmigen Anschlagfeder (39'') jeweils an einem kluppenkörperseitigen Widerlager (49) abgestützt sind.

18. Kluppe nach einem der Ansprüche 1 bis 17, **dadurch gekennzeichnet**, daß der Kluppenhebel (7) insbesondere bei aus der Verankerung verschwenkter bzw. gelöster Federeinrichtung (19) unmittelbar montier- und demontierbar ist.

19. Kluppe nach einem der Ansprüche 1 bis 18, **dadurch gekennzeichnet**, daß die die Kipp- bzw. Wälzachse (29) bildende Schneide eines Lagerteils (15') in Längsrichtung der Schneide leicht ballig zur Ermöglichung einer Ausgleichs-Verschwenkbewegung quer zur Längsrichtung der Kipp- bzw. Wälzachse (29) ausgebildet ist.

20. Kluppe nach einem der Ansprüche 1 bis 18, **dadurch gekennzeichnet**, daß das eine eher schneidenförmige Lagerteil (15') und das damit zusammenwirkende weitere eher ein Widerlager darstellende Lagerteil (15'') in einer Längshülse (53) angeordnet sind, in der die beiden Lagerteile (15', 15'') in Längsrichtung der Kipp- oder Wälzachse (29) vor- und nachlaufend zum Kluppenhebel (7) vorstehend eingreifen und darüber gehalten sind.

21. Kluppe nach Anspruch 20, **dadurch gekennzeichnet**, daß zur Montage bzw. Demontage des Kluppenhebels (7) die Aufnahmehülse (53) drehfest mit dem Kluppenkörper (17) verbunden und mit einem Längsschlitz (55) versehen ist, und daß das nach Art eines Lageransatzes (57) in die Aufnahmehülse (53) axial ragende Lagerteil (15'), welches mit dem Kluppenhebel (7) verbunden ist, gemeinsam mit dem Wider-Lagerteil (15'') um die Zentralachse der Aufnahmehülse (53) soweit verschwenkbar ist, bis das an die Breite des Längsschlitzes (55) abgestimmte Lagerteil (15') durch den Längsschlitz (55) hindurch ein- und ausführbar und damit der Kluppenhebel (7) montier- bzw. demontierbar ist.

22. Kluppe nach Anspruch 20, **dadurch gekennzeichnet**, daß zur Montage bzw. Demontage des Kluppenhebels (7) die Aufnahmehülse (53) drehfest mit dem Kluppenhebel (7) verbunden und mit einem Längsschlitz (55) versehen ist, und daß die Aufnahmehülse (53) um ihre Zentralachse um das nach Art eines Lageransatzes (57) in die Aufnahmehülse (53) axial ragende Lagerteil (15') und das parallel dazu vorgesehene und ebenfalls in der Aufnahmehülse (53) befindliche Wider-Lagerteil (15'') soweit verschwenkbar ist, bis die Aufnahmehülse (53) und damit der Kluppenhebel (7) durch Abziehen bzw. Aufstecken der längs geschlitzten Aufnahmehülse (53) auf das an die Breite des Längsschlitzes (55) abgestimmte Lagerteil (15') montier- bzw. demontierbar ist.

## Claims

1. Clip for detachable holding of moving fabric webs particularly plastic sheet webs, with a clip body (17) and a clip lever (7) thereon that can be pivoted between its closed position and its open position and is prestressed into its stop-limited end position by spring device (19), characterized in that the pivoting bearing is designed by an axis body-free bearing in the manner of a cradle bearing, in which bearing part (15') on the side of the clip lever is held in mutual contact on additional bearing part (15'') that is at least indirectly supported on the side of the clip body with formation of axis of tilt or rolling axis (29).

2. Clip according to claim 1, wherein the clip lever and thus its associated bearing part (15') is held by positive locking in contact with thus interacting additional bearing part (15'') on the side of the clip body.

3. Clip according to claim 1, wherein the clip lever and thus its associated bearing part (15') is held in a nonpositive manner in contact with thus interacting additional part (15'') on the side of the clip body.

4. Clip according to one of claims 1 to 3, wherein bearing part (15') on the side of the clip lever is made knife-shaped or cutting edge-shaped, and wherein thus interacting bearing part (15'') supported on the side of the clip body is provided with an essentially cross-sectionally V-shaped bearing recess at least as a projection.

5. Clip according to one of claims 1 to 3, wherein bearing part (15') on the side of the clip lever is provided with an essentially cross-sectionally V-shaped bearing recess at least as a projection and wherein bearing part (15'') supported on the clip body side and interacting with it is designed in a knife to knife edge manner.

6. Clip according to claim 4 or 5, wherein the blade with a wedge-shaped end tapered in cross-section of the one bearing part (15') and the corresponding V-shaped negative edge in second bearing (15'') are each provided with contact radii which are matched to one another and which cause the surfaces to slide over one another.

7. Clip according to claim 4 or 5, wherein the one bearing part (15') is provided with a rolling radius that forms the axis of tilt or rolling axis (29) which unrolls on second bearing part (15'') when a tilting motion is carried out.

8. Clip according to one of claims 1 to 7, wherein in both end positions of clip lever (7), boundary wall (31) on the side of the knife and boundary wall (33), interacting with respectively adjacent further bearing part (15''), of essentially V-shaped bearing recess exhibits an at least slight angle measurement for impurities to exit.

9. Clip according to claim 8, wherein the remaining angle measurement is at least 0.5°, preferably at least 1°.

10. Clip according to one of claims 1 to 9, wherein the V-shaped bearing recess on the additional bearing part (15'') is formed as a sector-pattern recess in a rod that is essentially circular to N polygonal in the cross-section and that runs parallel to the axis of tilt or rolling axis (29).

11. Clip according to one of claims 1 to 10, wherein adjustment limit (39) is further provided to avoid any deviating motion upon separation of bearing parts (15', 15'') that are supported on one another when locking forces are introduced into clip lever (7) that is still open.

12. Clip according to claim 11, wherein adjustment limit (39) consists of stop limit (39'), in which an appropriate projection (7', 7'') strikes on clip lever (7) when locking forces are introduced on still open clip lever (71) after overcoming play on a stop (43).

13. Clip according to claim 11 or 12, wherein stop (43) consists of counter-bearing part (15'') supported on the side of the clip body or stop (43) that is separated from it and supported on the side of the clip body.

14. Clip according to claim 11, wherein adjustment limit (39) is designed as stop-spring limit (39''), which is supported on the one hand on clip lever (7) and on the other hand on clip body (17) and is aligned, so that with an appropriate power component the stop-spring limit counteracts the locking forces acting on clip lever (7).

15. Clip according to claim 14, wherein only one stop spring (39'') is provided, which as a spring device (19) also holds clip lever (7) prestressed in she respective end position.

16. Clip according to one of claims 1 to 15, wherein particularly stop spring (39'') and/or spring device (19) that holds clip lever (7) prestressed in the respective end position is formed by an optionally multilayer leaf spring.

17. Clip according to one of claims 14 to 16, wherein stop spring (39'') that is preferably shaped in the manner of a leaf spring is provided essentially in the middle of the axis of tilt or rolling axis (29) preferably in the area of clip lever (7), in two-part form on the forward and trailing end of axis of tilt or rolling axis (29) or with middle segment (39''b) that runs parallel to this axis of tilt or rolling axis (29) and that is offset to the front ends, segment (39''b) which is preferably supported on clip lever (7), and front end segments (39''a) of the leaf spring-shaped stop spring (39'') are each supported on counter-bearing (49) on the side of the clip body.

18. Clip according to one of claims 1 to 17, wherein clip lever (7), particularly when spring device (19) pivoted or loosened out of the anchoring, can be immediately assembled or disassembled.

19. Clip according to one of claims 1 to 18, wherein the blade of a bearing part (15') that forms axis of tilt or rolling axis (29) in the lengthwise direction of the blade is designed slightly in a crowning manner to make possible a compensating pivoting motion crosswise to the lengthwise direction of axis of tilt or rolling axis (29).

20. Clip according to one of claims 1 to 18, wherein the one rather blade-shaped bearing part (15') and additional bearing part (15'') interacting with it and representing a counter-bearing are placed in a longitudinal sleeve (53), in which both bearing parts (15', 15'') engage in a protruding fashion in the lengthwise direction of axis of tilt or rolling axis (29), forward of and trailing clip lever (7) and are held over it.

21. Clip according to claim 20, wherein for assembly or disassembly of clip lever (7), receiving sleeve (53) is solidly connected with clip body (17) and is provided with elongated slit (55), and wherein bearing part (15') that protrudes axially into receiving sleeve (53) in the manner of bearing projection (57), which is connected with clip lever (7), and together with counter-bearing part (15'') it can be pivoted around the central axis of receiving sleeve (53), until bearing part (15') that is matched to the width of elongated slit (55) can be moved in and out through elongated slit (55) and thus clip lever (7) can be assembled or disassembled.

22. Clip according to claim 20, wherein for assembly or disassembly of clip lever (7), receiving sleeve (53) is solidly connected with clip lever (7) and is provided with elongated slit (55), and receiving sleeve (53) can be pivoted around its central axis around bearing part (15') that protrudes axially into receiving sleeve (53) in the manner of bearing projection (57) and counter-bearing part (15'') that is provided parallel to it and also is located in receiving sleeve (53) can be pivoted, until receiving sleeve (53) and thus clip lever (7) can be assembled or disassembled by removing or putting on longitudinally slotted receiving sleeve (53) on bearing part (15') that matches the width of elongated slit (55).

## Revendications

1. Pince pour la fixation amovible de bandes de matériau et, en particulier, de bandes de feuilles minces en matière plastique, avec un levier de pince (7) pouvant pivoter entre sa position de fermeture et sa position d'ouverture et précontraint dans chacune de ses positions terminales limitées par une butée au moyen d'un dispositif à ressort (19), caractérisée en ce que le support de pivotement est constitué par un support exempt d'axe matériel à la manière d'un support à berceau, dans lequel une pièce de support (15') du côté du levier de pince, est fixée à une autre pièce de support (15'') supportée, au moins indirectement, du côté du corps de pince avec butée mutuelle en formant l'axe de basculement ou de roulement (29).

2. Pince selon la revendication 1, caractérisée en ce que le levier de pince, et donc sa pièce de support correspondante (15'), est maintenu mécaniquement avec butée sur l'autre pièce de support (15'') coopérant avec elle et située du côté du corps de pince.

3. Pince selon la revendication 1, caractérisée en ce que le levier de pince, et donc sa pièce de support correspondante (15'), est maintenu géométriquement avec butée sur l'autre pièce de support (15'') coopérant avec elle et située du côté du corps de pince.

4. Pince selon l'une des revendications 1 à 3, caractérisée en ce que la pièce de support (15') du côté du levier de pince, a une forme en couteau ou en arête et en ce que la pièce de support (15''), coopérant avec elle et supportée du côté du corps de pince, est pourvue d'une cavité de support avec une section essentiellement en forme de V, au moins sous forme d'embase.

5. Pince selon l'une des revendications 1 à 3, caractérisée en ce que la pièce de support (15') du côté du levier de pince, est pourvue d'une cavité de support à section essentiellement en forme de V, au moins sous forme d'embase et que la pièce de support (15''), coopérant avec elle et supportée du corps de pince, a une forme en couteau ou en arête.

6. Pince selon la revendication 4 ou 5, caractérisée en ce que l'arête d'une pièce de support (15') présentant une section cunéiforme et le bord négatif en forme de V correspondante dans la deuxième pièce de support (15''), comporte des rayons de contact adaptés l'un à l'autre et réalisant un glissement de surface.

7. Pince selon la revendication 4 ou 5, caractérisée en ce qu'une pièce de support (15') est pourvue d'un rayon de roulement formant l'axe de basculement ou de roulement (29), qui roule sur la deuxième pièce de support (15'') pour réaliser un mouvement de basculement.

8. Pince selon l'une des revendications 1 à 7, caractérisée en ce que, dans les deux positions terminales du levier de pince (7), la paroi de limitation du côté du couteau (31) et la paroi de limitation (33) voisine de l'autre pièce de support (15'') de la cavité de support essentiellement en forme de V, qui coopèrent avec elle, présentent une dimension angulaire au moins faible pour permettre l'évacuation des saletés.

9. Pince selon la revendication 8, caractérisée en ce que la dimension angulaire restante est égale à au moins 0,5° et, de préférence au moins 1°.

10. Pince selon l'une des revendications 1 à 9, caractérisée en ce que la cavité de support en forme de V est formée sur la pièce de support (15''), sous forme d'une cavité en forme de secteur, dans une barre à section essentiellement circulaire ou polygonale à n côtés et disposée parallèlement à l'axe de basculement ou de roulement (29).

11. Pince selon l'une des revendications 1 à 10, caractérisée en ce qu'il est prévu, en outre, une limitation de déplacement (39) pour éviter un mouvement d'écartement avec séparation l'une de l'autre des pièces de support (15', 15'') appuyées l'une sur l'autre quand des forces de fermeture sont appliquées au levier de pince (7) encore ouvert.

12. Pince selon la revendication 11, caractérisée en ce que la limitation de déplacement (39) est constituée d'une limite de butée (39'), dans laquelle une embase correspondante (7', 7'') sur le levier de pince (7), vient buter sur une butée (43) quand apparaissent les forces de fermeture sur le levier de pince (71) encore ouvert, après avoir dépassé un jeu.

13. Pince selon la revendication 11 ou 12, caractérisée en ce que la butée (43) est constituée de la pièce de support opposée (15'') supportée du côté du corps de pince ou d'une butée (43) supportée du corps de pince et séparément de celle-ci.

14. Pince selon la revendication 11, caractérisée en ce que la limite de déplacement (39) est assurée par une limitation à ressort de butée (39'') qui est supporté, d'une part, par le levier de pince (7) et, d'autre part, par le corps de pince (17) et qui est disposé de façon à agir avec une composante de force appropriée contre les forces de fermeture agissant sur le levier de pince (7).

15. Pince selon la revendication 14, caractérisée en ce qu'il est prévu uniquement un ressort de butée (39'') qui maintient à l'état précontraint, comme dispositif à ressort (19), le levier de pince (7) dans chacune de ses positions terminales.

16. Pince selon l'une des revendications 1 à 15, caractérisée en ce que le dispositif à ressort 19 maintenant, en particulier, le ressort de butée 39'' et/ou le levier de pince 7 dans chaque position terminale, est constitué par un ressort à lame formé éventuellement de plusieurs lames.

17. Pince selon l'une des revendications 14 à 16, caractérisée en ce que le ressort de butée (39'') ayant, de préférence, la forme d'un ressort à lame, est pourvu essentiellement au milieu de l'axe de basculement ou de roulement (29) et, de préférence, dans la région du levier de pince (7), d'une section moyenne en deux pièces aux extrémités avant et arrière de l'axe de basculement ou de roulement (29) ou d'une section moyenne (39b) disposée parallèlement à cet axe de basculement ou de roulement (29) et décalée par rapport aux extrémités frontales, alors que les sections terminales (39'') frontales du ressort de butée en forme de ressort à lame (39'') sont supportées chacune par une butée (49) du côté du corps de pince.

18. Pince selon l'une des revendications 1 à 17, caractérisée en ce que le levier de pince (7) peut être monté et démonté immédiatement en l'enlevant de l'ancrage du dispositif à ressort (19) pivoté ou desserré.

19. Pince selon l'une des revendications 1 à 18, caractérisée en ce que l'arête d'une pièce de support (14) formant l'axe de basculement ou de roulement (29) a une forme convexe dans le sens longitudinal de l'arête, pour permettre un mouvement de pivotement de compensation, transversalement à l'axe longitudinal de l'axe de basculement ou de roulement (29).

20. Pince selon l'une des revendications 1 à 18, caractérisée en ce que l'une des pièces de support (15') précédemment en forme d'arête et l'autre pièce de support (15'') coopérant avec elle et constituant intérieurement une butée, sont disposées dans une douille longitudinale (53) dans laquelle les deux pièces de support (15', 15'') s'engagent en faisant saillie dans la direction longitudinale de l'axe de basculement ou de roulement (29) vers l'avant et l'arrière, avec le levier de pince (7) et sont maintenues par celui-ci.

21. Pince selon la revendication 20, caractérisée en ce que, pour monter ou démonter le levier de pince (7), la douille de réception (53) est assemblée de manière fixe au corps de pince (17) et est pourvue d'une fente longitudinale (55) et en ce que la pièce de support (15') faisant saillie axialement à la manière d'une embase de support (57) dans la douille de réception (53) et qui est assemblée au levier de pince (7) peut pivoter autour de l'axe central de la douille de réception (53) avec la pièce de support opposée (15''), jusqu'à ce que la pièce de support (15'), adaptée à la largeur de la fente longitudinale (55), puisse être introduite ou extraite à travers la fente longitudinale (55) et que le levier de pince (7) puisse être monté ou démonté de cette manière.

22. Pince selon la revendication 20, caractérisée en ce que, pour monter ou démonter le levier de pince (7), la douille de réception (53) est assemblée sans possibilité de rotation au levier de pince (7) et est pourvue d'une fente longitudinale (55) et en ce que la douille de réception peut pivoter autour de son axe central autour de la pièce de support (15') faisant saillie axialement à la manière d'une embase de support (57) dans la douille de réception (53) et autour de la pièce de support opposée (15'') prévue parallèlement à celle-ci et se trouvant également dans la douille de réception (53) jusqu'à ce que la douille de réception (53), et donc le levier de pince (7) puissent être montés ou démontés en retirant ou en introduisant la douille de réception à fente longitudinale (53) sur la pièce de support (15') adaptée à la largeur de la fente longitudinale (55).
